# EUROPEAN PATENT APPLICATION

(11) **EP 2 512 147 A1**
(43) Date of publication of application: **17.10.2012**
(21) Application number: 10835469.7
(22) Date of filing: 07.12.2010
(51) Int. Cl.: H04N 21/2543, H04W 4/12

(54) **INTERNET PROTOCOL TELEVISION (IPTV) ON-DEMAND METHOD, DEVICE AND SYSTEM**

(30) Priority: 07.12.2009 CN 200910224099
(71) Applicant: Huawei Technologies Co., Ltd., Guangdong 518129 (CN)
(72) Inventor: PAN, Haitao, Shenzhen Guangdong 518129 (CN)
(74) Representative: Goddar, Heinz J.
(86) International application number: PCT/CN2010/079504
(87) International publication number: WO 2011/069434

(57) **Abstract**

Embodiments of the present invention provide an IPTV VOD method, apparatus, and system. The method includes: sending the VOD request to IPTV media entertainment management middleware (IPTV-MEM); sending the fee deduction request to a charging apparatus through the SMG; receiving, from the SMG, a fee deduction response sent by the charging apparatus in response to the fee deduction request; and if fee deduction succeeds, notifying the IPTV-MEM of pushing a VOD media stream to a target Set Top Box (STB) according to the VOD request. The payment modes for IPTV VOD are diversified and the flexibility of payment for IPTV VOD is enhanced.

## Description

This application claims priority to Chinese Patent Application No. 200910224099.2, filed with the Chinese Patent Office on December 7, 2009 and entitled "INTERNET PROTOCOL TELEVISION VIDEO ON DEMAND METHOD, APPARATUS, AND SYSTEM", which is incorporated herein by reference in its entirety.

### FIELD OF THE INVENTION

The present invention relates to the field of communications technologies, and in particular, to an IPTV VOD method, apparatus, and system.

### BACKGROUND OF THE INVENTION

IPTV (Internet Protocol Television) is a completely new service that integrates the communication security of a telecommunication network, information content of a broadcast television network, and features of the Internet, and provides voice, data, and video services over one connection simultaneously, that is, based on one physical connection, a user can not only originate calls, access the Internet, and watch TV, but also enjoy more data, voice, and video integrated services.

IPTV is implemented using a combination of TV and Set Top Box (STB) as terminal devices. It provides broadband value-added services, such as interactive multimedia services inclusive of conventional TV programs for home users. With the deployment and development of IPTV, there are more and more IPTV users and VOD content is increasingly popular with users, but only one charging mode (users must make payment in the business center of an operator) and only one watching mode are available.

In the DTV (Digital Television) field of the prior art, due to the restrictions of an HFC (Hybrid Fiber Coaxial) one-way network, users can only watch programs through STBs (Set Top Boxes) and cannot implement interactions. Therefore, to overcome the weakness of the one-way network, a phone is used in DTV to implement a VOD request, or a mobile phone is used to send a short message to implement a VOD request, that is, a user originates a call or sends a short message to the broadcast television call center to request a VOD program, and upon receiving the call or short message, a service staff performs subscription in a DTV Subscriber Management Subsystem (DTV-SMS). Then, the DTV system delivers VOD stream information according to the user request and deducts a fee from the user account in the DTV system.

During the implementation of the present invention, the inventor finds that the prior art has at least the following weaknesses: The prior art uses only short messages as interactive backhaul channels of VOD for DTV users, users can only play programs on demand for themselves, and fees are deducted from the individual accounts of the users in the DTV system. Because only the VOD channels of the one-way DTV network are provided for users, the prior art has the problems of single VOD mode, single charging mode, single watching mode, and inconvenience for use.

### SUMMARY OF THE INVENTION

Embodiments of the present invention provide an IPTV VOD method, apparatus, and system.

In one aspect, an embodiment of the present invention provides an IPTV VOD method, including: receiving a VOD request sent by a mobile terminal from a Short Message Gateway (SMG); sending the VOD request to IPTV media entertainment management middleware (IPTV-MEM) to trigger the IPTV-MEM to authenticate the VOD request; receiving a fee deduction request sent by the IPTV-MEM with respect to the mobile terminal if authentication succeeds; sending the fee deduction request to a charging apparatus through the SMG; receiving, from the SMG, a fee deduction response sent by the charging apparatus in response to the fee deduction request; and if fee deduction succeeds, notifying the IPTV-MEM of pushing a VOD media stream to a target STB according to the VOD request.

In another aspect, an embodiment of the present invention provides an IPTV VOD apparatus, including: a VOD request receiving unit, configured to receive a VOD request sent by a mobile terminal from an SMG; a VOD request sending unit, configured to send the VOD request to an IPTV-MEM to trigger the IPTV-MEM to authenticate the VOD request; a fee deduction request receiving unit, configured to receive a fee deduction request sent by the IPTV-MEM with respect to the mobile terminal if authentication succeeds; a fee deduction request sending unit, configured to send the fee deduction request to a charging apparatus through the SMG; a fee deduction response receiving unit, configured to receive, from the SMG, a fee deduction response sent by the charging apparatus in response to the fee deduction request; and a VOD notification sending unit, configured to notify the IPTV-MEM of pushing a VOD media stream to a target STB according to the VOD request if fee deduction succeeds.

In still another aspect, an embodiment of the present invention provides an IPTV VOD system, including an SMG, a service gateway, an IPTV-MEM, and a charging apparatus. The service gateway is connected to the SMG and the IPTV-MEM. The SMG is connected to the charging apparatus. The service gateway is configured to: receive a VOD request sent by a mobile terminal from the SMG; send the VOD request to the IPTV-MEM to trigger the IPTV-MEM to authenticate the VOD request; receive a fee deduction request sent by the IPTV-MEM with respect to the mobile terminal if authentication succeeds; send the fee deduction request to the charging apparatus through the SMG; receive, from the SMG, a fee deduction response sent by the charging apparatus in response to the fee deduction request; and if fee deduction succeeds, notify the IPTV-MEM of pushing a VOD media stream to a target STB according to the VOD request. The SMG is configured to: forward the VOD request of the mobile terminal to the service gateway; forward the fee deduction request sent by the service gateway to the charging apparatus; and forward the fee deduction response sent by the charging apparatus to the service gateway. The IPTV-MEM is configured to: authenticate the VOD request; if authentication succeeds, send the fee deduction request to the service gateway; receive the fee deduction response; and if fee deduction succeeds, push the VOD media stream to the target STB according to the VOD request.

According to the technical solution provided by the embodiments of the present invention, IPTV VOD is implemented by means of a short message, and the fee is paid through a mobile terminal, and therefore, the problem of single IPTV payment mode in the prior art is solved. The embodiments of the present invention provide a new fee deduction mode for IPTV VOD, which enhances the flexibility of payment for users to watch IPTV VOD programs and greatly facilitates the development of services and new marketing modes. The technical solution provided by the embodiments of the present invention is applicable to the DTV field and also applicable to live TV and value-added content on demand.

### BRIEF DESCRIPTION OF THE DRAWINGS

To make the technical solution in the embodiments of the present invention or in the prior art clearer, the accompanying drawings used in the description of the embodiments or the prior art are briefly described hereunder. Evidently, the accompanying drawings illustrate only some exemplary embodiments of the present invention and persons skilled in the art can derive other drawings from these drawings without creative efforts.
FIG. 1 is a flowchart of an embodiment of an IPTV VOD method according to the present invention;
FIG. 2 is a networking architecture diagram of an embodiment of an IPTV VOD system according to the present invention;
FIG. 3 is a function block diagram of a service gateway in an IPTV VOD system according to the present invention;
FIG. 4 is a flowchart of another embodiment of an IPTV VOD method according to the present invention;
FIG. 5A and FIG. 5B are a flowchart of still another embodiment of an IPTV VOD method according to the present invention;
FIG. 6 is a flowchart of still another embodiment of an IPTV VOD method according to the present invention;
FIG. 7A and FIG. 7B are a flowchart of still another embodiment of an IPTV VOD method according to the present invention;
FIG. 8 is a flowchart of still another embodiment of an IPTV VOD method according to the present invention;
FIG. 9 is a schematic structural diagram of an embodiment of an IPTV VOD apparatus according to the present invention; and
FIG. 10 is a schematic structural diagram of another embodiment of an IPTV VOD apparatus according to the present invention.

### DETAILED DESCRIPTION OF THE EMBODIMENTS

To make the objective, technical solutions, and merits of the embodiments of the present invention clearer, the technical solutions provided by the embodiments of the present invention are hereinafter described clearly and completely with reference to the accompanying drawings. Evidently, the described embodiments are only some exemplary embodiments of the present invention, rather than all embodiments of the present invention. Based on the embodiments that are provided herein, persons skilled in the art can derive other embodiments without making any creative effort, and all such other embodiments fall within the protection scope of the present invention.

An embodiment of the present invention provides an IPTV VOD method.

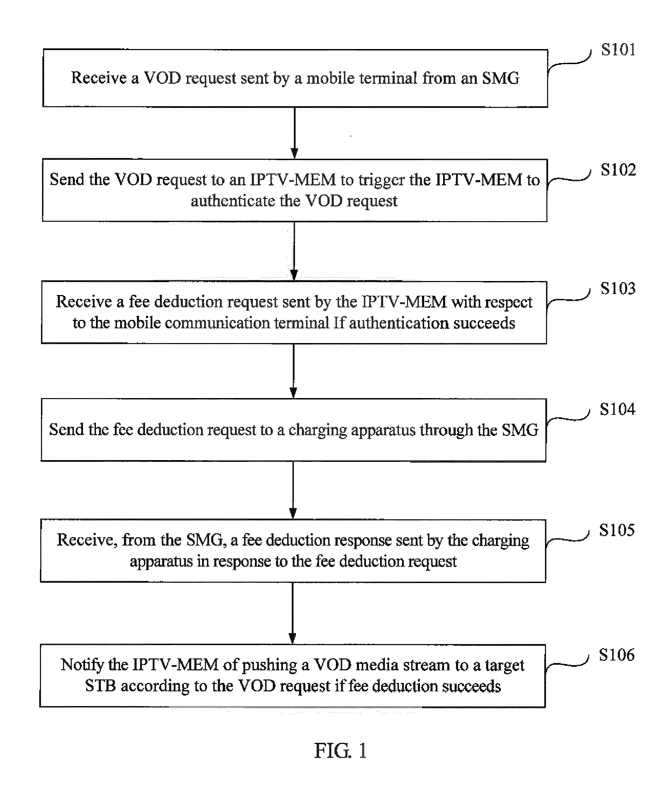

FIG. 1 is a method flowchart according to an embodiment of the present invention. As shown in FIG. 1, the method includes the following steps:
S101. Receive a VOD request sent by a mobile terminal from an SMG.
S102. Send the VOD request to an IPTV media entertainment management middleware (IPTV-MEM) to trigger the IPTV-MEM to authenticate the VOD request.

Optionally, the authentication in this embodiment includes VOD user authentication and VOD content authentication, for example, checking whether a VOD user exists, whether a VOD user status is normal, whether VOD content exists, and whether a VOD content status is normal.

S103. Receive a fee deduction request sent by the IPTV-MEM with respect to the mobile terminal if authentication succeeds.

S104. Send the fee deduction request to a charging apparatus, for example, a Business Operation Support System (BOSS), through the SMG.

S105. Receive, from the SMG, a fee deduction response sent by the charging apparatus in response to the fee deduction request.

S106. Notify the IPTV-MEM of pushing a VOD media stream to a target STB according to the VOD request if fee deduction succeeds.

Optionally, the media stream in this embodiment may be a video file such as a movie program.

According to the embodiment of the present invention, IPTV VOD is implemented by means of a short message, and the fee is paid through a mobile terminal, and therefore, the problem of single IPTV payment mode in the prior art is solved. The embodiment of the present invention provides a new fee deduction mode for the IPTV VOD, which enhances the flexibility of payment for users to watch IPTV VOD programs and greatly facilitates the development of services and new marketing modes for operators. The technical solution provided by the embodiment of the present invention is applicable to the DTV field and also applicable to live TV and value-added content on demand.

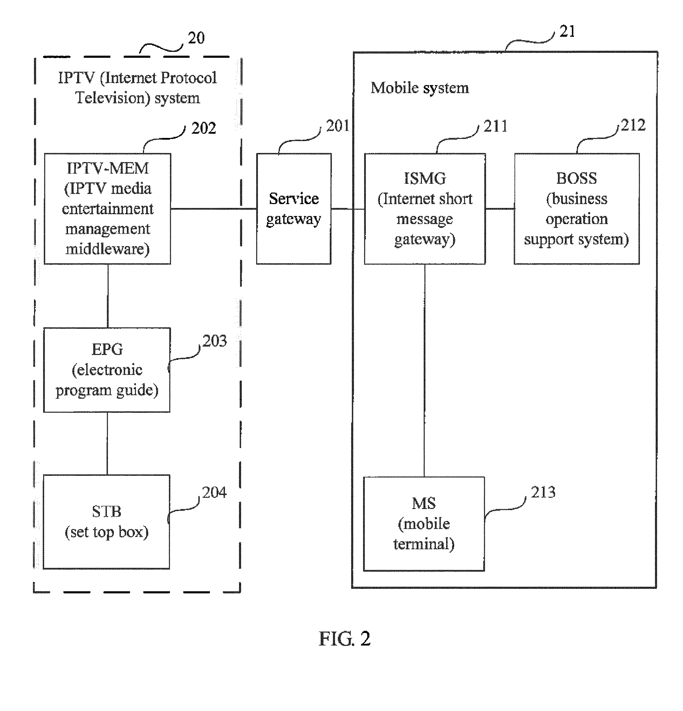

Embodiments of the present invention further provide an IPTV VOD system. FIG. 2 is a networking architecture diagram of a system according to an embodiment of the present invention. The VOD system includes devices in an IPTV system 20 and a mobile system 21. The VOD system in this embodiment mainly includes an SMG 211, a service gateway 201, an IPTV media entertainment management middleware (IPTV-MEM) 202, and a charging gateway (such as a BOSS) 212. The service gateway 201 is connected to the SMG 211 and the IPTV-MEM 202. The SMG 211 is connected to the charging apparatus 212.

First, the basic functions of the IPTV system 20 and mobile system 21 are described in detail.

The main functions of the IPTV system 20 are providing an STB user with streaming services such as live TV, VOD, and value-added services. Specifically, an STB 204 is configured to display information such as the content, description, and prompt of a movie to a user through pages of an EPG (electronic program guide) 203. The EPG 203 is configured to receive the selection of a VOD movie that the user of the STB 204 desires or is interested in and sends the VOD request of the STB 204 to the IPTV-MEM (IPTV Media Entertainment Management middleware) 202. The IPTV-MEM 202 is configured to: receive the VOD request sent by the EPG 203, authenticate the user and content, perform service processing such as calculating the fee that needs to be deducted, and after the user and the VOD content are authenticated successfully, send the VOD movie to the STB 204 of the IPTV user, so that the IPTV user can watch the VOD movie on the STB 204.

The main functions of the mobile system 21 are providing a mobile user with mobile services such as a voice service, Short Message Service (SMS), and Multimedia Message Servile (MMS). Specifically, a mobile terminal 213 is configured to receive an instruction from the user and send a short message, a multimedia message, or an enhanced message to an ISMG (Internet Short Message Gateway) in the mobile system. The ISMG 211 is configured to receive the short message sent by the user through the mobile terminal and forward the short message according to a number sent by the user. The BOSS is configured to implement functions such as charging for the mobile terminal.

To improve the convenience of payment for VOD services and the adaptability of VOD services for users so as to increase the Average Revenue Per User (ARPU) of users, an IPTV service gateway is added in the system of the embodiment to implement interworking between the IPTV system and the mobile short message gateway. In practice, the service gateway 201 may be located in the IPTV system 20 or mobile system 21, or be a standalone device outside the two systems. Through this IPTV service gateway, users can recommend a VOD movie to themselves or their friends by sending a short message and the fee may be deducted from their mobile accounts. The system of this embodiment makes IPTV VOD more flexible and entertaining to users and implements differentiated operation of IPTV VOD content.

After the service gateway is added, the functions of each component of the system in this embodiment are as follows:

The service gateway of this embodiment is configured to: receive a VOD request sent by the mobile terminal 213 from the SMG 211; send the VOD request to the IPTV-MEM 202 to trigger the IPTV-MEM 202 to authenticate the VOD request; receive a fee deduction request sent by the IPTV-MEM 202 with respect to the mobile terminal 213 if authentication succeeds; send the fee deduction request to the charging apparatus 212 through the SMG 211; receive, from the SMG 211, a fee deduction response sent by the charging apparatus 212 in response to the fee deduction request; and if fee deduction succeeds, notify the IPTV-MEM 202 of pushing a VOD media stream to the target STB 204 according to the VOD request.

The SMG 211 of this embodiment is configured to: forward the VOD request of the mobile terminal 213 to the service gateway 201; forward the fee deduction request sent by the service gateway 201 to the charging apparatus 212; and forward the fee deduction response sent by the charging apparatus 212 to the service gateway 201.

The IPTV-MEM 202 is configured to: authenticate the VOD request; if authentication succeeds, send the fee deduction request to the service gateway 201; receive the fee deduction response; and if fee deduction succeeds, push the VOD media stream to the target STB 204 according to the VOD request.

Optionally, the IPTV-MEM 202 of this embodiment is further configured to: after authentication succeeds, send prompt information of the VOD media stream to the target STB; receive a watching confirmation response that the target STB sends according to the prompt information; and if watching is confirmed, send a fee deduction request to the service gateway.

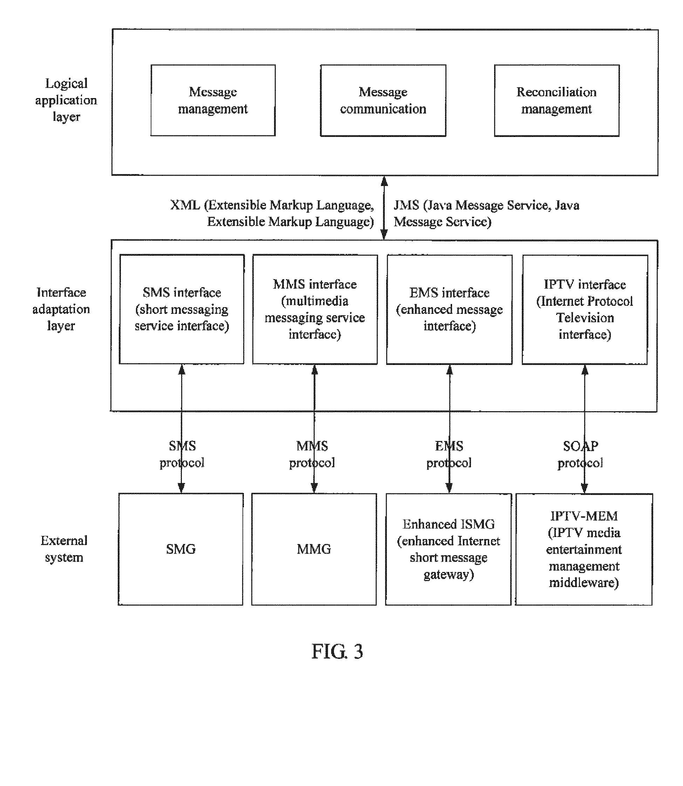

FIG. 3 is a function block diagram of a service gateway according to this embodiment. FIG. 3 shows the internal structure of the service gateway and its connections with external systems.

As shown in FIG. 3, the IPTV service gateway includes an interface adaptation layer and a logical application layer.

The IPTV service gateway encapsulates external interfaces in the interface adaptation layer for future extension and opening. The external interfaces may include the interface with the SMG, a Multimedia Message Gateway (MMG), and an enhanced SMG, and may also include the internal protocol interface with the IPTV system. The foregoing interfaces are an SMS (Short Message Service) interface, an MMS (Multimedia Message Service) interface, an EMS (Enhanced Message Service) interface, and an IPTV interface located in the interface adaptation layer.

A standard SMS protocol is used for interworking between the IPTV service gateway and the SMG. A standard MMS protocol is used for interworking between the IPTV service gateway and the MMG. A standard EMS protocol is used for interworking between the IPTV service gateway and the enhanced ISMG. Thereby, the sending and receiving of SMS, MMS, and EMS of the message system are implemented. The SOAP (Simple Object Access Protocol) is used for interworking between the service gateway and the IPTV-MEM to implement the forwarding of VOD request and fee deduction request.

Among the external interfaces of the IPTV service gateway, the IPTV interfaces are SOAP interfaces, including:
1. VOD request interface
   interface mode: service gateway to MEM, asynchronous message;
   request input: sequence number, mobile number, user ID [null allowed], and content ID;
   response: message sending result
2. Fee deduction request interface
   interface mode: MEM to service gateway, synchronous message;
   request input: sequence number, mobile number, user ID [null allowed], content ID, and fee;
   response: fee deduction result, sequence number, mobile number, and deducted amount
3. Reconciliation interface
   interface mode: SOAP + FTP (File Transfer Protocol);
   request input: start sequence number, end sequence number, file name, total quantity, and total amount;
   response: reconciliation result and inconsistent quantity

The reconciliation interface is used to implement reconciliation between the IPTV system and the mobile system. During reconciliation, unequal (inconsistent) account information may be found. Therefore, the inconsistent quantity needs to be clarified and inconsistent information confirmed by the IPTV-MEM and BOSS is extracted. That is, a comparison is made between the bills generated by the IPTV-MEM and the fee deduction records of the BOSS to check whether the fee processing in the two systems is consistent. If inconsistent, the inconsistent information is extracted and separately processed manually.

The logical application layer includes: a message communication module, configured to implement communication processing of standard protocols and private protocols, where the standard protocols refer to the SMS protocol, MMS protocol, and EMS protocol, and the private protocols refer to the SOAP protocol; a message management module, configured to manage internal and external message queues and avoid message loss and abnormality; and a reconciliation management module, configured to implement reconciliation for VOD services of users, including reconciliation of VOD records of users in the IPTV system and the fee deduction records in the mobile system.

The working process of an IPTV VOD system in this embodiment is described hereunder.

When a user sends a VOD short message to a specified number through a mobile phone, the ISMG receives the VOD short message and forwards VOD information to the IPTV service gateway of the embodiment of the present invention according to the sent number. The IPTV service gateway invokes the "VOD request interface" to request the IPTV-MEM to check whether a VOD user and VOD content are legal, for example, check whether the user exists, whether a user status is normal, whether the content exists, and whether a content status is normal. If legal, the IPTV-MEM displays VOD confirmation information to the user through the EPG. When the IPTV user confirms to watch the VOD program on the STB, the IPTV-MEM invokes the "fee deduction request interface" to request to deduct the VOD fee from the mobile account of the user.

Based on the fee deduction request sent by the IPTV-MEM, the IPTV service gateway instructs the ISMG to send a VOD fee deduction request to the BOSS according to a signed agreement, so that the BOSS deducts the VOD fee from the mobile account of the user who sends the VOD request.

When the IPTV-MEM knows that the BOSS deducts the fee successfully, the IPTV-MEM pushes a VOD media stream to the IPTV user through the EPG.

In the system of the embodiment, IPTV VOD is implemented by means of a short message, and the fee is paid through a mobile terminal, and therefore, the problem of single IPTV payment mode in the prior art is solved. In addition, the embodiment of the present invention develops a new IPTV VOD mode, which can implement IPTV VOD by one user for another user, so that VOD can be implemented between IPTV users through an STB. Thereby, users can not only play programs on demand for themselves, but also play programs on demand for other people. With the foregoing technical solution, the embodiment of the present invention provides a new fee deduction mode for IPTV VOD, which enhances the flexibility of payment for users to watch IPTV VOD programs and greatly facilitates the development of services and new marketing modes for operators.

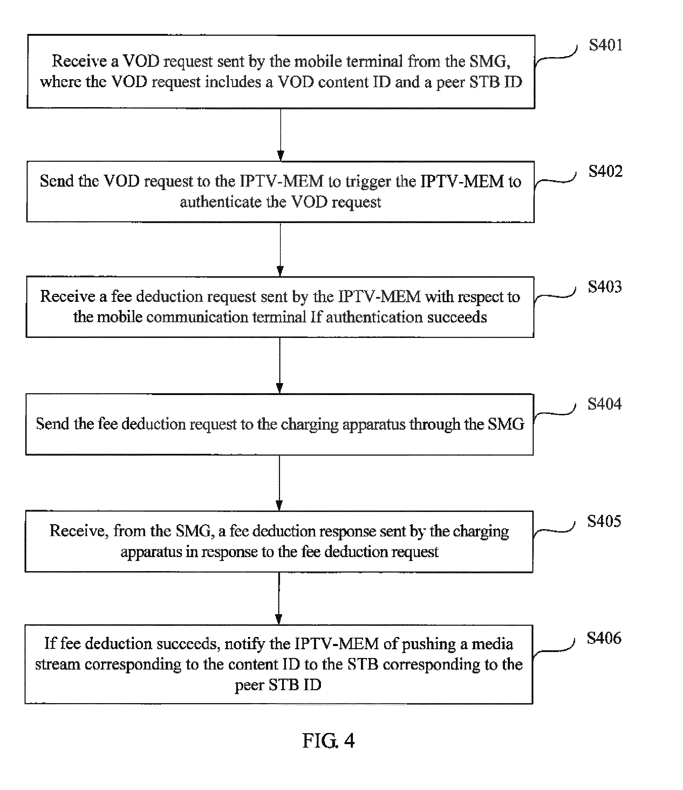

This embodiment further provides an IPTV VOD method. The method implements VOD by one user for another user. FIG. 4 is a flowchart of an IPTV VOD method according to this embodiment. As shown in FIG 4, the method includes the following steps:
S401. Receive a VOD request sent by the mobile terminal 213 from the SMG 211, where the VOD request includes a VOD content ID and a peer STB ID.
S402. Send the VOD request to the IPTV-MEM 202 to trigger the IPTV-MEM 202 to authenticate the VOD request.
S403. Receive a fee deduction request sent by the IPTV-MEM with respect to the mobile terminal 213 if authentication succeeds.
S404. Send the fee deduction request to the charging apparatus 212, for example, a BOSS, through the SMG 211.
S405. Receive, from the SMG 211, a fee deduction response sent by the charging apparatus 212 in response to the fee deduction request.
S406. If fee deduction succeeds, notify the IPTV-MEM 202 of pushing a media stream corresponding to the content ID to the STB corresponding to the peer STB ID.

An example is provided below to describe the detailed process of playing a movie on demand by one user for another user according to the embodiment.

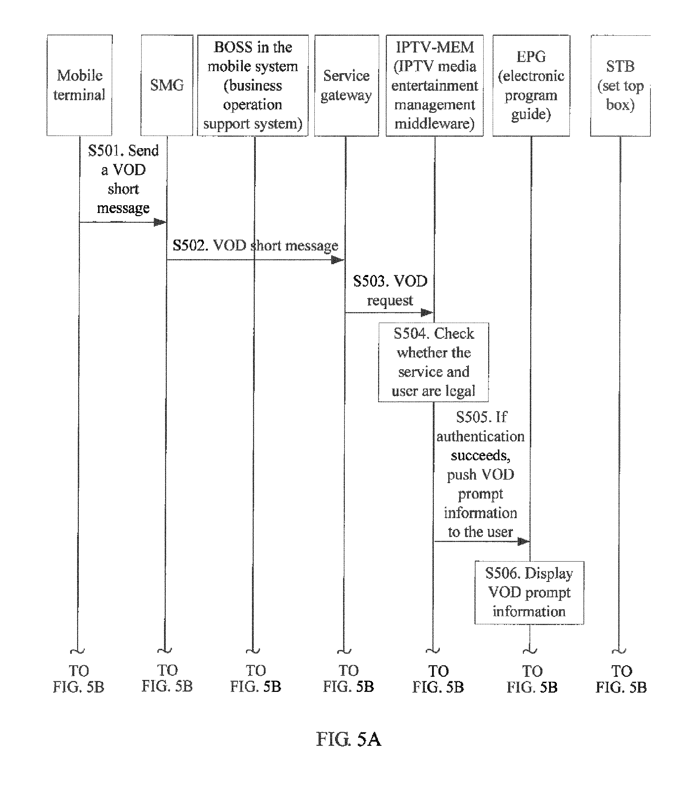

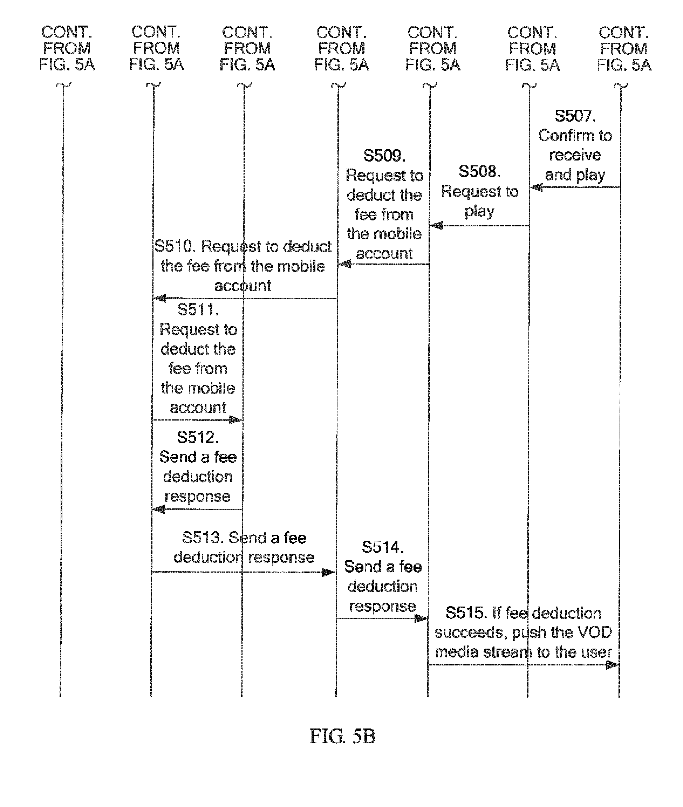

FIG. 5A and FIG. 5B are a flowchart of an IPTV VOD method according to the embodiment. As shown in FIG. 5A and FIG. 5B, the method includes the following steps:
S501. A user of the mobile terminal 213 plays a movie on demand for a friend and sends a VOD short message including the peer STB user ID and content ID to a specified number, where the VOD short message includes the specified number, an STB user ID, and a VOD content ID.
S502. According to the specified number, the SMG 211 sends the short message including the STB user ID and VOD content ID to the IPTV service gateway 201.
S503. The IPTV service gateway 201 sends a VOD request to the IPTV-MEM 202, where the VOD request includes the STB user ID and VOD content ID.
S504. The IPTV-MEM 202 authenticates the VOD request. The authentication includes checking whether the user is legal and whether the content is legal. If the STB user or the VOD content does not exist, the IPTV-MEM 202 returns a VOD failure message.
S505. If the STB user and the VOD content are legal, the IPTV-MEM 202 pushes VOD prompt information to the EPG 203.
S506, The EPG 203 displays the VOD prompt information.

For example, the EPG 203 prompts the peer STB user, "Your friend *** plays wonderful content *** on demand for you. Are you sure to watch the content,?"
S507. If the peer STB user confirms to watch the VOD content, the peer STB user sends a watching confirmation instruction through the STB 204.
S508. The EPG 203 sends a watching confirmation response to the IPTV-MEM 202, requesting the IPTV-MEM 202 to deduct the fee and play the VOD content.
S509. According to the fee information of the VOD content, the IPTV-MEM 202 requests the IPTV service gateway 201 to deduct the fee from the account of the mobile terminal 213.
S510. The IPTV service gateway 201 sends a fee deduction request to the SMG 211.
S511. According to the fee information of the VOD content, the SMG 211 requests the BOSS 212 of the mobile system to deduct a corresponding fee from the account of the specified mobile terminal 213.
S512. When the fee is deducted from the account of the specified mobile terminal successfully, the BOSS 212 sends a fee deduction response indicating successful fee deduction to the SMG 211 to notify the IPTV-MEM 202 of pushing the corresponding media stream to the STB user.
S513. The SMG 211 forwards the fee deduction response to the IPTV service gateway 201.
S514. The IPTV service gateway 201 forwards the fee deduction response to the IPTV-MEM 202.
S515. Upon receiving the response indicating successful fee deduction, the IPTV-MEM 202 pushes the VOD media stream to the STB user. The process of playing a movie on demand for the friend is complete.

The method of this embodiment diversifies the payment modes for IPTV VOD, enhances the flexibility of payment for IPTV VOD, and implements VOD by one user for another user.

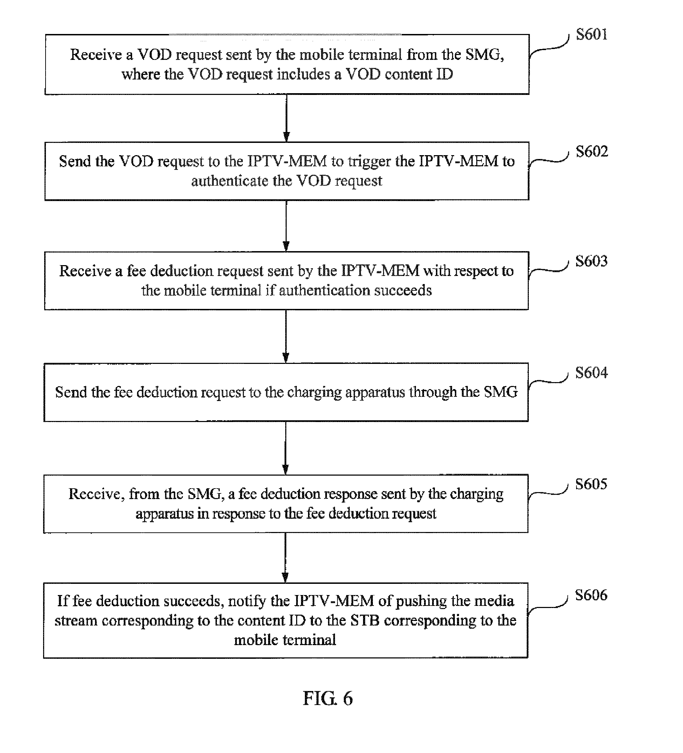

This embodiment further provides an IPTV VOD method. This method implements VOD for a user himself/herself FIG. 6 is a flowchart of another IPTV VOD method according to this embodiment. As shown in FIG. 6, the method includes the following steps:
S601. Receive a VOD request sent by the mobile terminal 213 from the SMG 211, where the VOD request includes a VOD content ID.
S602. Send the VOD request to the IPTV-MEM 202 to trigger the IPTV-MEM 202 to authenticate the VOD request.
S603. Receive a fee deduction request sent by the IPTV-MEM 202 with respect to the mobile terminal 213 if authentication succeeds.
S604. Send the fee deduction request to the charging apparatus 212, for example, a BOSS, through the SMG 211.
S605. Receive, from the SMG 211, a fee deduction response sent by the charging apparatus 212 in response to the fee deduction request.
S606. If fee deduction succeeds, notify the IPTV-MEM 202 of pushing the media stream corresponding to the content ID to the STB corresponding to the mobile terminal.

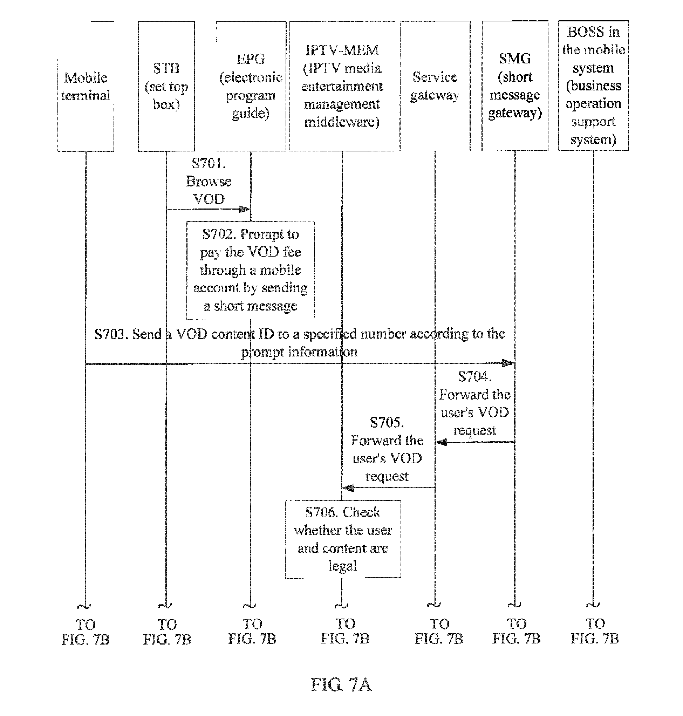

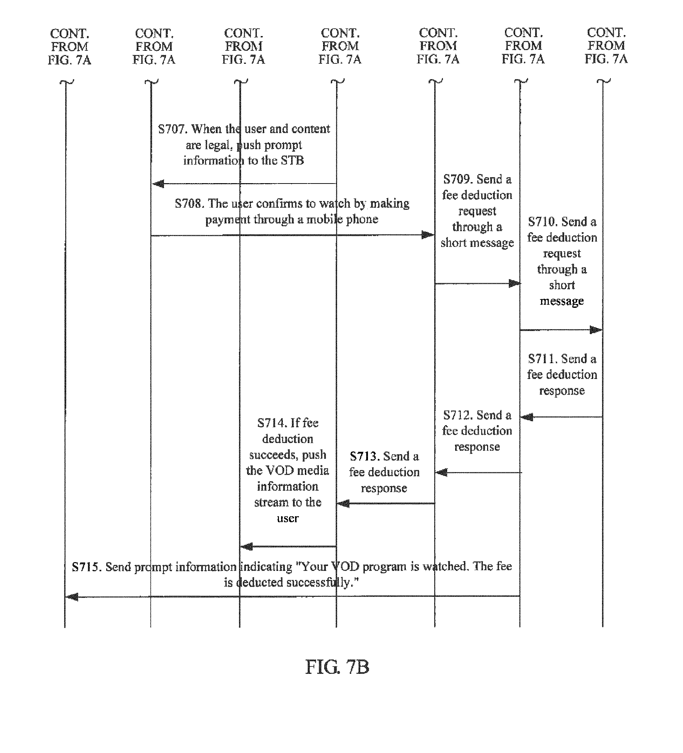

An example is provided below to describe the detailed process of playing a movie on demand for a user himself/herself according to this embodiment. FIG. 7A and FIG. 7B are a flowchart of an IPTV VOD method according to this embodiment. As shown in FIG. 7A and FIG. 7B, the method includes the following steps:
S701. The STB user browses VOD information through the EPG.
S702. According to the movie information, the EPG 203 displays prompt information indicating that user can pay the VOD fee through IPTV payment or by sending a short message.
S703. According to the prompt information, the mobile terminal 213 sends a VOD content ID to a specified number.
S704. According to the specified number, the SMG 211 forwards the user's VOD request to the IPTV service gateway 201.
S705. The IPTV service gateway 201 forwards the VOD request to the IPTV-MEM 202.
S706. According to the registered mobile number, the IPTV-MEM 202 queries the corresponding STB user and checks whether the STB user and the VOD content are legal. If multiple STB users exist, the IPTV-MEM 202 pushes a VOD message to the multiple STB users and the STB selects whether to play the movie.
S707. The IPTV-MEM 202 pushes prompt information to the STB user.

For example, the prompt information is "Are you sure to watch wonderful content ***?"
S708. The STB user confirms to watch the movie by making payment through a mobile phone.
S709. The IPTV service gateway 201 sends a fee deduction request through a short message to the SMG 211.
S710. The SMG 211 forwards the fee deduction request to the BOSS 212.
S711. When the BOSS 212 deducts the fee from the account of the mobile terminal 213 successfully, the BOSS 212 sends a fee deduction response indicating successful fee deduction to the SMG 211 to notify the IPTV-MEM 202 of pushing the VOD media stream to the user.
S712. The SMG 211 forwards the fee deduction response indicating successful fee deduction to the IPTV service gateway 201.
S713. The IPTV service gateway 201 forwards the fee deduction response indicating successful fee deduction to the IPTV-MEM 202.
S714. When receiving the fee deduction response indicating successful fee deduction, the IPTV-MEM 202 pushes the VOD media stream to the STB user.
S715. Optionally, the SMG 211 sends prompt information indicating successful fee indication to the mobile terminal 213.

For example, the prompt information is "Your VOD program is watched. The fee is deducted successfully."

The method of this embodiment diversifies the payment modes for IPTV VOD and enhances the flexibility of payment for IPTV VOD.

Optionally, the method of this embodiment enables users to play programs on demand for themselves or for other users. In this case, the VOD request includes at least a VOD content ID and a peer STB ID, and the IPTV-MEM needs to push the media stream corresponding to the content ID to the STB corresponding to the mobile terminal and the STB corresponding to the peer STB ID. The process that users play programs on demand for themselves and the process in which users play programs on demand for other users are described in detail in the foregoing embodiments. The two processes may be used for reference when the two VOD modes are supported. Details are not provided here. Optionally, this embodiment may include a reconciliation process between the IPTV system 20 and the mobile system 21. Optionally, in the method of this embodiment, reconciliation is performed after successful fee deduction or after the media stream is pushed.

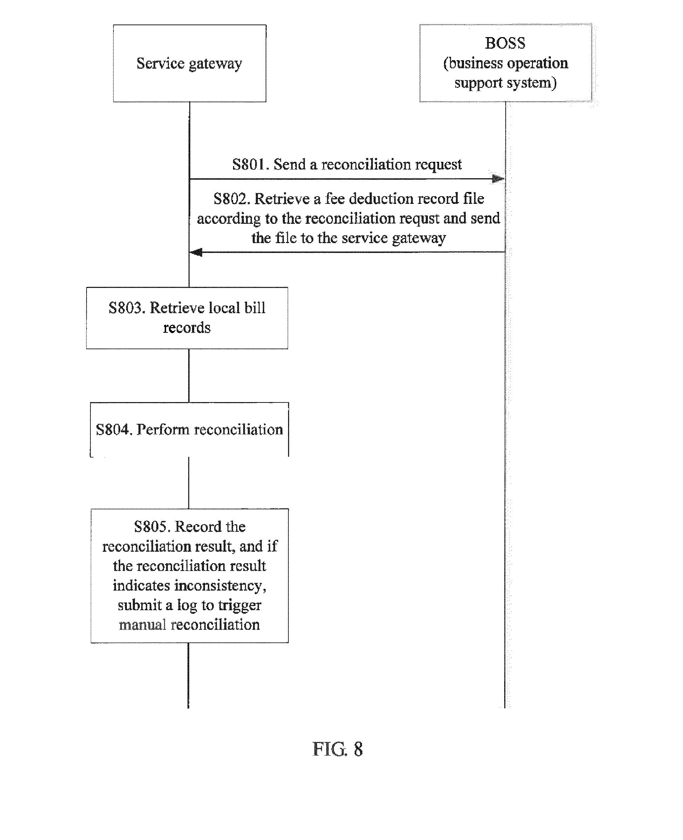

FIG. 8 is a flowchart of a reconciliation method according to an embodiment of the present invention. As shown in FIG. 8, the method includes the following steps:
S801. The IPTV service gateway 201 sends a reconciliation request to the BOSS 212 through the SMG 211.
S802. The service gateway 201 receives a fee deduction record file that the BOSS 212 sends according to the reconciliation request.
S803. The service gateway 201 retrieves a local bill record.
S804. The service gateway 201 performs reconciliation according to the fee deduction record file and the local bill record.
S805. The service gateway 201 records the reconciliation result. If the reconciliation result indicates inconsistency, the service gateway submits a log to trigger manual reconciliation.

This embodiment further provides an IPTV VOD apparatus.

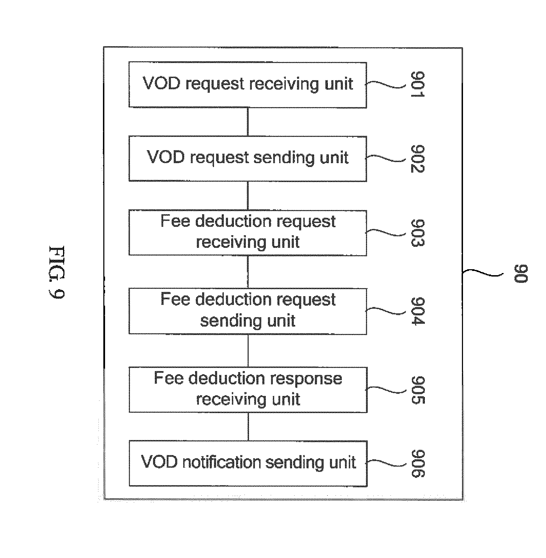

FIG. 9 is a general function block diagram of an apparatus according to this embodiment. As shown in FIG. 9, the apparatus 90 includes:
a VOD request receiving unit 901, configured to receive a VOD request sent by a mobile terminal from an SMG;
a VOD request sending unit 902, configured to send the VOD request to an IPTV-ME to trigger the IPTV-MEM to authenticate the VOD request;
a fee deduction request receiving unit 903, configured to receive a fee deduction request sent by the IPTV-MEM with respect to the mobile terminal if authentication succeeds;
a fee deduction request sending unit 904, configured to send the fee deduction request to a charging apparatus (such as a BOSS) through the SMG;
a fee deduction response receiving unit 905, configured to receive, from the SMG, a fee deduction response sent by the charging apparatus in response to the fee deduction request; and
a VOD notification sending unlit 906, configured to notify the IPTV-MEM of pushing a VOD media stream to a target STB according to the VOD request if fee deduction succeeds.

Optionally, the VOD request includes at least a VOD content ID; and the VOD notification sending unit 906 is configured to notify the IPTV-MEM of pushing a media stream corresponding to the content ID to an STB corresponding to the mobile terminal.

Optionally, the VOD request includes at least a VOD content ID and a peer STB ID; and the VOD notification sending unit 906 is configured to notify the IPTV-MEM of pushing a media stream corresponding to the content ID to the STB corresponding to the mobile terminal and an STB corresponding to the peer STB ID; or notify the IPTV-MEM of pushing the media stream corresponding to the content ID to the STB corresponding to the peer STB ID.

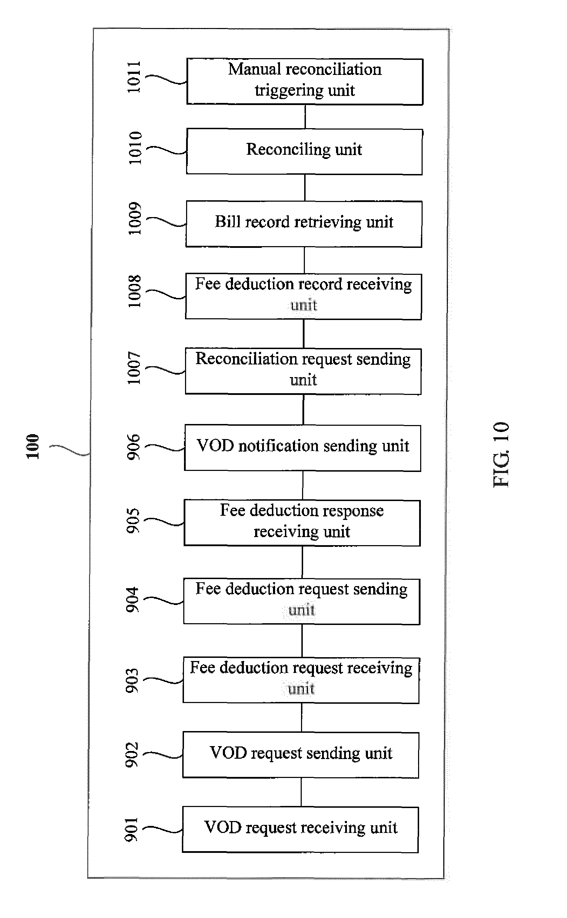

FIG. 10 is a specific function block diagram of an apparatus according to this embodiment. As shown in FIG. 10, the apparatus 100 may further include:
a reconciliation request sending unit 1007, configured to send a reconciliation request to a charging apparatus through an SMG;
a fee deduction record receiving unit 1008, configured to receive a fee deduction record file that the charging apparatus sends according to the reconciliation request;
a bill record retrieving unit 1009, configured to retrieve a local bill record; and
a reconciling unit 1010, configured to perform reconciliation according to the fee deduction record file and the local bill record.

Optionally, the apparatus 100 of this embodiment further includes:
a manual reconciliation triggering unit 1011, configured to submit a log to trigger manual reconciliation if the reconciliation result indicates inconsistency.

Optionally, the interface between the VOD apparatus and the SMG is an SMS interface, an MMS interface, or an EMS interface; and the interface between the VOD apparatus and the IPTV-MEM is a SOAP interface.

The working process of the apparatus of this embodiment is detailed in the preceding embodiment and therefore not described here.

With the apparatus of this embodiment, IPTV VOD is implemented by means of a short message, and the fee is paid through a mobile terminal, and therefore, the problem of single IPTV payment mode in the prior art is solved. In addition, this embodiment develops a new IPTV VOD mode, which can implement IPTV VOD by one user for another user, so that VOD can be implemented between IPTV users through an STB. Thereby, users can not only play programs on demand for themselves, but also play programs on demand for other people. With the foregoing technical solution, this embodiment provides a new fee deduction mode for IPTV VOD, which enhances the flexibility of payment for users to watch IPTV VOD programs and greatly facilitates the development of services and new marketing modes for operators.

It is understandable to persons skilled in the art that all or part of the steps in the methods of the foregoing embodiments may be implemented by related hardware instructed by a program. The program may be stored in a computer readable storage medium. When the program runs, the processes of the preceding methods are executed. The storage medium may be a magnetic disk, a CD-ROM, a Read-Only Memory (ROM), or a Random Access Memory (RAM).

The foregoing embodiments are used only to describe the technical solution of the embodiments of the present invention instead of limiting the present invention. Although the present invention is described in detail with reference to the foregoing embodiments, persons skilled in the art should understand that they can still make modifications to the technical solution described in the foregoing embodiments or make equivalent substitutions to some technical features thereof, without departing from the scope of the technical solution of the embodiments of the present invention.

## Claims

1. An Internet Protocol Television, IPTV, Video on Demand, VOD, method, comprising:
receiving a VOD request sent by a mobile terminal from a Short Message Gateway, SMG;
sending the VOD request to IPTV media entertainment management middleware, IPTV-MEM, to trigger the IPTV-MEM to authenticate the VOD request;
receiving a fee deduction request sent by the IPTV-MEM with respect to the mobile terminal if authentication succeeds;
sending the fee deduction request to a charging apparatus through the SMG;
receiving, from the SMG, a fee deduction response sent by the charging apparatus in response to the fee deduction request; and
if fee deduction succeeds, notifying the IPTV-MEM of pushing a VOD media stream to a target Set Top Box, STB, according to the VOD request.

2. The method according to claim 1, wherein the VOD request comprises at least a VOD content ID; and the notifying the IPTV-MEM of pushing a VOD media stream to a target STB according to the VOD request comprises:
notifying the IPTV-MEM of pushing a media stream corresponding to the content ID to an STB corresponding to the mobile terminal.

3. The method according to claim 1, wherein the VOD request comprises at least a VOD content ID and a peer STB ID; and the notifying the IPTV-MEM of pushing a VOD media stream to a target STB according to the VOD request comprises:
notifying the IPTV-MEM of pushing a media stream corresponding to the content ID to an STB corresponding to the mobile terminal and an STB corresponding to the peer STB ID; or
notifying the IPTV-MEM of pushing the media stream corresponding to the content ID to the STB corresponding to the peer STB ID.

4. The method according to claim 1, further comprising:
sending a reconciliation request to the charging apparatus through the SMG;
receiving a fee deduction record file that the charging apparatus sends according to the reconciliation request;
retrieving a local bill record; and
performing reconciliation according to the fee deduction record file and the local bill record.

5. The method according to claim 4, further comprising:
submitting a log to trigger manual reconciliation if a reconciliation result indicates inconsistency.

6. An Internet Protocol Television, IPTV, Video on Demand, VOD, apparatus, comprising:
a VOD request receiving unit, configured to receive a VOD request sent by a mobile terminal from a Short Message Gateway, SMG;
a VOD request sending unit, configured to send the VOD request to IPTV media entertainment management middleware, IPTV-MEM, to trigger the IPTV-MEM to authenticate the VOD request;
a fee deduction request receiving unit, configured to receive a fee deduction request sent by the IPTV-MEM with respect to the mobile terminal if authentication succeeds;
a fee deduction request sending unit, configured to send the fee deduction request to a charging apparatus through the SMG;
a fee deduction response receiving unit, configured to receive, from the SMG, a fee deduction response sent by the charging apparatus in response to the fee deduction request; and
a VOD notification sending unit, configured to notify the IPTV-MEM of pushing a VOD media stream to a target Set Top Box, STB, according to the VOD request if fee deduction succeeds.

7. The apparatus according to claim 6, wherein the VOD request comprises at least a VOD content ID; and
the VOD notification sending it is configured to notify the IPTV-MEM of pushing a media stream corresponding to the content ID to an STB corresponding to the mobile terminal.

8. The apparatus according to claim 6, wherein the VOD request comprises at least a VOD content ID and a peer STB ID; and
the VOD notification sending unit is configured to notify the IPTV-MEM of pushing a media stream corresponding to the content ID to an STB corresponding to the mobile terminal and an STB corresponding to the peer STB ID; or notify the IPTV-MEM of pushing the media stream corresponding to the content ID to the STB corresponding to the peer STB ID.

9. The apparatus according to claim 6, further comprising:
a reconciliation request sending unit, configured to send a reconciliation request to the charging apparatus through the SMG;
a fee deduction record receiving unit, configured to receive a fee deduction record file that the charging apparatus sends according to the reconciliation request;
a bill record retrieving unit, configured to retrieve a local bill record; and
a reconciling unit, configured to perform reconciliation according to the fee deduction record file and the local bill record.

10. The apparatus according to claim 6, further comprising:
a manual reconciliation triggering unit, configured to submit a log to trigger manual reconciliation if a reconciliation result indicates inconsistency.

11. The apparatus according to claim 6, wherein:
an interface between the VOD apparatus and the SMG is a Short Message Service, SMS, interface, a Multimedia Message Service, MMS, interface, or an Enhanced Message Service, EMS, interface; and
an interface between the VOD apparatus and the IPTV-MEM is a Simple Object Access Protocol, SOAP, interface.

12. An Internet Protocol Television, IPTV, Video on Demand, VOD, system, comprising a Short Message Gateway, SMG, a service gateway, IPTV media entertainment management middleware, IPTV-MEM, and a charging apparatus, wherein:
the service gateway is connected to the SMG and the IPTV-MEM; and the SMG is connected to the charging apparatus;
the service gateway is configured to: receive a VOD request sent by a mobile terminal from the SMG; send the VOD request to the IPTV-MEM to trigger the IPTV-MEM to authenticate the VOD request; receive a fee deduction request sent by the IPTV-MEM with respect to the mobile terminal if authentication succeeds; send the fee deduction request to the charging apparatus through the SMG; receive, from the SMG, a fee deduction response sent by the charging apparatus in response to the fee deduction request; and if fee deduction succeeds, notify the IPTV-MEM of pushing a VOD media stream to a target Set Top Box, STB, according to the VOD request;
the SMG is configured to: forward the VOD request of the mobile terminal to the service gateway; forward the fee deduction request sent by the service gateway to the charging apparatus; and forward the fee deduction response sent by the charging apparatus to the service gateway; and
the IPTV-MEM is configured to: authenticate the VOD request; if authentication succeeds, send the fee deduction request to the service gateway; receive the fee deduction response; and if fee deduction succeeds, push the VOD media stream to the target STB according to the VOD request.

13. The system according to claim 12, wherein:
the IPTV-MEM is further configured to: after authentication succeeds, send prompt information of the VOD media stream to the target STB; receive a watching confirmation response that the target STB sends according to the prompt information; and if watching is confirmed, send the fee deduction request to the service gateway.
